# FASCICULE DE BREVET EUROPEEN

(11) **EP 3 545 135 B1**
(45) Date de publication et mention de la délivrance du brevet: **18.11.2020**
(21) Numéro de dépôt: 17805169.4
(22) Date de dépôt: 23.11.2017
(51) Int. Cl.: E01H 1/08

(54) **BALAYEUSE DE VOIRIE**
STRASSENKEHRMASCHINE
STREET SWEEPER

(30) Priorité: 24.11.2016 BE 201605878; 22.11.2017 BE 201705853; 22.11.2017 BE 201705854
(43) Date de publication de la demande: 02.10.2019
(73) Titulaire: Lange Christian SA, 5300 Andenne (BE)
(72) Inventeur: LANGE, Christian, 5350 Ohey (BE); LANGOUCHE, Jean-Benoît, 4170 Comblain-au-Pont (BE); BUDDEKER, Franck, 4350 Remicourt (BE); MARÉCHAL, Adrien, 4600 Visé (BE); BRUGGEMAN, Tom, 9210 Haasdonk (BE)
(74) Mandataire: Pronovem
(86) Numéro de dépôt international: PCT/EP2017/080184
(87) Numéro de publication internationale: WO 2018/096029

(56) Documents cités:
- EP-A2- 1 715 103
- WO-A1-2014/012158
- DE-A1- 2 924 502
- DE-A1- 4 128 988
- FR-A1- 2 297 286
- FR-A1- 2 912 349
- GB-A- 2 244 741
- US-A- 2 960 708
- US-A1- 2014 101 874

## Description

### Objet de l'invention

La présente invention se rapporte à une balayeuse de voirie à conducteur porté. Il s'agit d'un véhicule de nettoyage muni d'un moteur thermique ou électrique et de un ou plusieurs balais tournants en contact avec le sol, ainsi que de systèmes d'aspiration et de récolte de déchets, et qui comprend une cabine pour le conducteur.

### Arrière-plan technologique

Les balayeuses du type tel que décrit dans la présente invention sont utilisées dans des environnements urbains ou industriels, pour le nettoyage de grandes surfaces. Le conducteur est assis dans la cabine, où il a accès aux éléments de contrôle de direction du véhicule ainsi qu'aux éléments de contrôle des moyens de nettoyage. Pour la plupart des machines connues aujourd'hui, ces moyens comprennent une paire de bras placés en dessous de la cabine et qui s'étendent devant et/ou à la périphérie du véhicule, et qui portent à leur extrémité un balai tournant pour dégager les déchets du sol. Les déchets sont amenés par les balais vers une bouche d'aspiration centrale, d'où ils sont aspirés par l'action d'une turbine vers un conteneur intégré dans la balayeuse.

Un problème pour ce type de machines est lié au contrôle adéquat des bras porte-balai. Il est avantageux de maintenir les balais sur le sol avec une pression constante, mais ceci est souvent impossible à réaliser par les systèmes actuels. En outre, les bras porte-balai sont souvent peu capables d'absorber les chocs causés par des obstacles rencontrés sur le terrain, ce qui mène à des blocages fréquents. DE 41 28 988 A1 décrit une balayeuse conforme aux préambules des revendications 1 et 8.

### Résumé de l'invention

La présente invention se rapporte à une balayeuse telle que décrite dans les revendications annexées.

Selon l'invention, la balayeuse est munie de différents mécanismes pour permettre le contrôle du mouvement des bras porte-balai dans un plan horizontal, en autorisant également l'absorption de chocs latéraux et/ou frontaux.

Les termes 'vertical' et 'horizontal' utilisés dans la présente description ainsi que dans les revendications sont applicables à une balayeuse lors qu'elle se trouve sur un terrain essentiellement horizontal.

L'invention est plus particulièrement lié à une balayeuse comprenant un châssis, au moins trois roues, un moteur de propulsion, une cabine pour le conducteur, une ou plusieurs balais, chaque balai pouvant effectuer une rotation par rapport à une armature montée à l'extrémité d'un bras porte-balai qui s'étend devant et/ou à la périphérie de la cabine, ainsi que des moyens d'aspiration et de collecte de déchets, où
- chacun des bras porte-balai est pourvu d'un mécanisme configuré pour pivoter le bras porte-balai autour d'un axe essentiellement vertical, ledit mécanisme comprenant un vérin linéaire et un premier bras auxiliaire, le vérin étant monté entre deux pivots, un des deux pivots étant relié au châssis et l'autre pivot étant relié au premier bras auxiliaire, caractérisé en ce que le premier bras auxiliaire (57, 75, 110) est pivotable autour du même axe essentiellement vertical que le bras porte-balai mais indépendamment de celui-ci,
- le premier bras auxiliaire et le bras porte-balai sont reliés entre eux au moins par un premier ressort et par une butée, configurés pour maintenir une position constante du bras porte-balai par rapport au premier bras auxiliaire lors de la mise en action du vérin dans l'une ou l'autre direction linéaire, ladite mise en action générant une rotation de l'ensemble du premier bras auxiliaire et du bras porte-balai dans une des deux directions rotatives,
- en cas de présence d'une force extérieure latérale agissant sur le balai, le poussant vers l'intérieur de la balayeuse, le premier ressort permet un pivotement du bras porte-balai vers le châssis, sans pivotement du premier bras auxiliaire.

Selon une forme d'exécution de l'invention, la balayeuse comprend un support qui est solidaire du bras porte-balai, dans lequel un point du premier bras auxiliaire qui se trouve de l'autre côté dudit axe essentiellement vertical par rapport au vérin, est relié à une des extrémités du premier ressort, l'autre extrémité dudit premier ressort étant reliée au support qui est solidaire du bras porte-balai, et dans lequel le déplacement du premier bras auxiliaire vers le support est limité par la butée qui est une butée en appui, de sorte que la mise en action du vérin dans l'une ou l'autre direction linéaire génère une rotation du premier bras auxiliaire dans une des deux directions rotatives, le premier bras auxiliaire entraînant le bras porte-balai à l'aide de la butée ou à l'aide du premier ressort.

Selon une autre forme d'exécution de l'invention, la balayeuse comprend en outre un deuxième ressort, un support qui est solidaire du bras porte-balai, un deuxième bras auxiliaire, dans laquelle la butée est une butée à ressort, par exemple un poussoir à ressort, le deuxième bras auxiliaire étant pivotable autour du même axe essentiellement vertical que le bras porte-balai et le premier bras auxiliaire mais indépendamment de ceux-ci, le premier ressort étant monté entre le premier et le deuxième bras auxiliaire, la butée à ressort et le premier ressort étant configurés pour être aptes à maintenir les deux bras auxiliaires solidaires l'un de l'autre tant que la butée à ressort n'est pas rompue, le deuxième ressort étant relié par une de ses extrémités à une tige qui est reliée au deuxième bras auxiliaire par un pivot, le deuxième ressort appuyant par sa deuxième extrémité sur le support, le deuxième ressort entourant ladite tige, ladite tige traversant le support et étant pourvue d'un bloc de retenue qui empêche la désolidarisation de ladite tige et du support, de sorte que :
- la mise en action du vérin dans l'une ou l'autre direction linéaire génère une rotation du premier bras auxiliaire dans une des deux directions rotatives, le premier bras auxiliaire entraînant le bras porte-balai à l'aide du bloc de retenue ou à l'aide du deuxième ressort,
- la butée à ressort et le premier ressort sont configurés pour maintenir la solidarité entre les bras auxiliaires lors de la mise en action du bras porte-balai par le vérin,
- la butée à ressort est configurée pour être rompue par des forces latérales ou frontales d'un niveau prédéfini, exercées sur le bras porte-balai, de sorte que le bras porte balai peut temporairement pivoter par rapport au premier bras auxiliaire, sans forcer le vérin.

La balayeuse selon la dernière forme d'exécution est avantageusement configurée tel qu'en cas de présence d'une force latérale qui tend à éloigner le bras porte-balai du châssis, le deuxième ressort est comprimé permettant une rotation du bras porte-balai par rapport au premier bras auxiliaire, ce dernier restant immobile, et que ladite compression du deuxième ressort est configurée pour continuer jusqu'à ce qu'elle rompt la butée à ressort, permettant ainsi au premier ressort de tirer le bras porte-balai vers l'arrière.

Selon une autre forme d'exécution de l'invention, le premier bras auxiliaire comprend une première partie d'un côté de l'axe essentiellement vertical et une deuxième partie de l'autre côté dudit axe essentiellement vertical, la première partie étant reliée au deuxième pivot, la balayeuse comprenant en outre un deuxième bras auxiliaire qui est pivotable autour du même axe essentiellement vertical que le bras porte-balai et le premier bras auxiliaire mais indépendamment de ceux-ci, le premier ressort ainsi que la butée qui est une butée en appui, étant montés entre le deuxième bras auxiliaire et le bras porte-balai, un deuxième ressort étant monté entre la deuxième partie du premier bras auxiliaire et le deuxième bras auxiliaire, le deuxième ressort étant relié par la première de ses deux extrémités à une tige qui s'étend à l'intérieur du deuxième ressort, ladite tige étant reliée au deuxième bras auxiliaire par un pivot, le deuxième ressort s'appuyant par sa deuxième extrémité sur la deuxième partie du premier bras auxiliaire, la tige étant coulissante par rapport au premier bras auxiliaire et la tige comprenant un bloc de retenue qui empêche la désolidarisation de la tige du premier bras auxiliaire, de sorte que :
- la mise en action du vérin dans l'une ou l'autre direction linéaire génère une rotation du premier bras auxiliaire dans une des deux directions rotatives, le premier bras auxiliaire entraînant le bras porte-balai à l'aide de la butée ou à l'aide du premier ressort,
- en cas de présence d'une force latérale qui tend à éloigner le bras porte-balai du châssis :
   ∘ le deuxième ressort est d'abord comprimé, permettant au deuxième bras auxiliaire de pivoter par rapport au premier bras, sans forcer le vérin,
   ∘ quand le deuxième ressort atteint un niveau de compression prédéfini, ce ressort se détend, en tirant le bras porte-balai en arrière.

La balayeuse selon l'une quelconque des formes d'exécutions précédentes peut comprendre en outre un ressort additionnel monté entre le châssis et une structure déplaçable dans la direction horizontale, ladite structure déplaçable étant reliée à un bras de support, le bras porte-balai et le premier bras auxiliaire étant reliés au bras de support de sorte que :
- le bras porte-balai et le premier bras auxiliaire sont pivotables par rapport au bras de support, autour dudit axe essentiellement vertical,
- le ressort additionnel est configuré pour absorber les chocs frontaux exercés sur le bras porte-balai.

Selon une autre forme d'exécution de l'invention, la balayeuse comprend un châssis, au moins trois roues, un moteur de propulsion, une cabine pour le conducteur, un ou plusieurs balais, chaque balai pouvant effectuer une rotation par rapport à une armature montée à l'extrémité d'un bras porte-balai qui s'étend devant et/ou à la périphérie de la cabine, ainsi que des moyens d'aspiration et de collecte de déchets, caractérisée en ce que chacun des bras porte-balai est pourvu d'un mécanisme configuré pour pivoter le bras porte-balai autour d'un axe essentiellement vertical, ledit mécanisme comprenant un vérin linéaire et un premier bras auxiliaire, le vérin étant monté entre deux pivots, un des deux pivots étant relié au châssis et l'autre pivot étant relié au premier bras auxiliaire, le dernier étant pivotable autour du même axe essentiellement vertical que le bras porte-balai mais indépendamment de celui-ci, la balayeuse comprenant en outre un ressort monté entre le châssis et une structure déplaçable en direction horizontale, ladite structure déplaçable étant reliée à un bras de support, le bras porte-balai et le premier bras auxiliaire étant reliés au bras de support de sorte que :
- le bras porte-balai et le premier bras auxiliaire sont pivotables par rapport au bras de support autour dudit axe essentiellement vertical,
- le ressort est configuré pour absorber les chocs frontaux exercés sur le bras porte-balai.

### Brève description des figures

La figure 1 représente une vue d'ensemble en perspective d'une balayeuse faisant l'objet de l'invention.
Les figures 2a-2c représentent des vues schématiques qui montrent de manière conceptuelle un mécanisme pour contrôler le mouvement des balais dans un plan horizontal, selon une première forme d'exécution de l'invention.
Les figures 3a-3c représentent des vues schématiques qui montrent comment le mécanisme présenté à la figure 2 est capable d'absorber les chocs latéraux et/ou frontaux.
La figure 4 représente une forme d'exécution d'un mécanisme qui reprend les fonctionnalités démontrées aux figures 2 et 3.
Les figures 5a et 5b représentent des vues schématiques qui montrent des mécanismes qui ne reprennent que l'une des fonctionnalités antichocs illustrées aux figures 2 et 3.
Les figures 6a-6c représentent des vues schématiques qui montrent un mécanisme pour contrôler le mouvement des balais dans un plan horizontal, selon une deuxième forme d'exécution.
Les figures 7a-7c représentent des vues schématiques qui montrent comment le mécanisme représenté à la figure 6 est capable d'absorber les chocs latéraux et/ou frontaux.
Les figures 8a et 8b représentent des vues schématiques qui montrent un mécanisme qui reprend les fonctionnalités illustrées aux figures 6 et 7.
La figure 9 représente le mécanisme de la figure 6, pourvu d'un ressort qui absorbe les chocs frontaux.
Les figures 10a-10c représentent des vues schématiques qui montrent un mécanisme pour contrôler le mouvement des balais dans un plan horizontal, selon une troisième forme d'exécution.
Les figures 11a-11c représentent des vues schématiques qui montrent comment le mécanisme représenté à la figure 9 est capable d'absorber les chocs latéraux et/ou frontaux.
La figure 12 représente le mécanisme des figures 10 et 11, pourvu d'un ressort qui absorbe les chocs frontaux.

### Description détaillée de l'invention

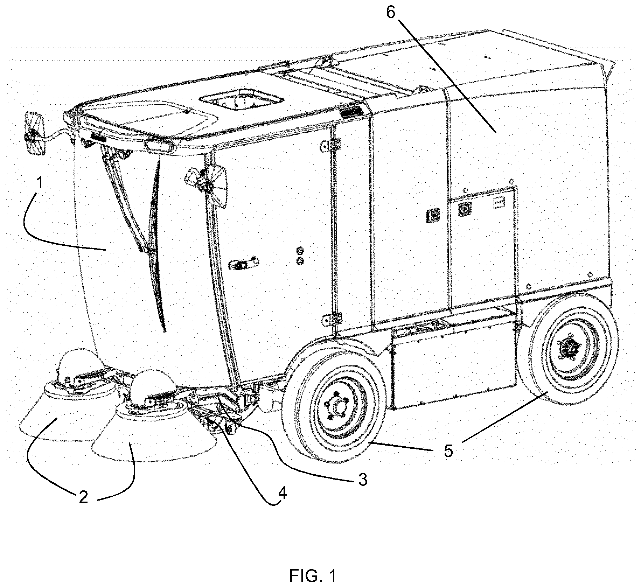

La figure 1 représente une vue générale d'une balayeuse qui forme l'objet de l'invention. On y voit la cabine 1 du conducteur, les balais 2 montés sur les bras porte-balai 3, la bouche d'aspiration 4, les roues 5 du véhicule. Dans le compartiment 6 se trouvent la turbine d'aspiration et un conteneur pour récolter les déchets. La balayeuse comprend également un moteur de propulsion qui peut être un moteur électrique ou toute autre source d'énergie applicable pour ce genre de véhicule. La balayeuse est de préférence un véhicule à quatre roues mais peut de manière générale avoir au moins trois roues.

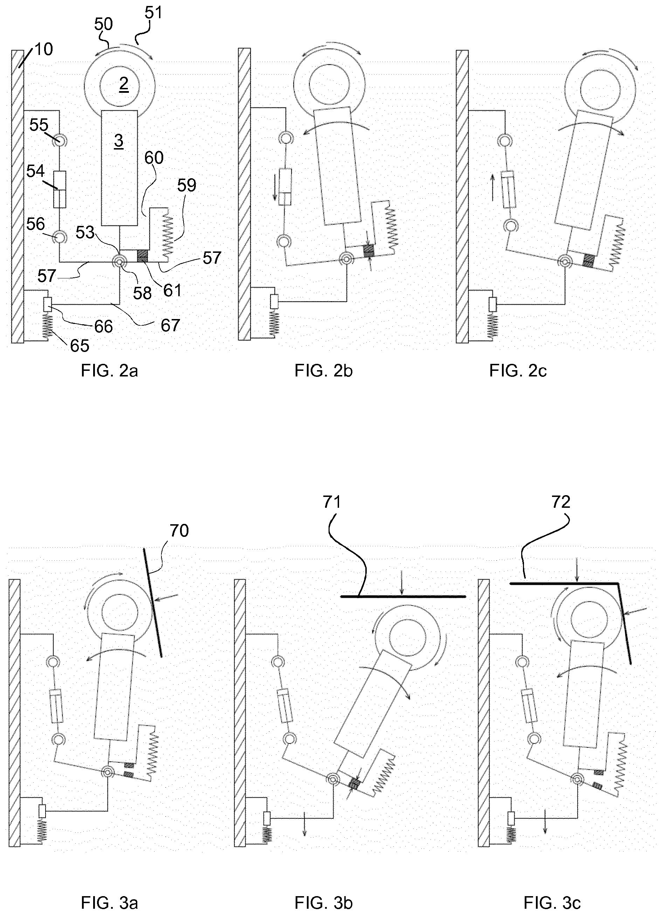

L'invention concerne un mécanisme qui permet le réglage de la position des balais 2 dans le plan horizontal. Le mécanisme est également capable d'absorber les chocs en cas de présence d'obstacles exerçant une force extérieure dans une ou plusieurs directions. Les figures 2a-2c montrent de manière conceptuelle le fonctionnement du mécanisme selon une première forme d'exécution. A la figure 2a, on voit une vue par le haut du balai de droite 2 de la balayeuse. Le mécanisme qui commande le balai de gauche est le symétrique du mécanisme de droite. Le balai 2 tourne dans une direction 50. Quand le balai est en contact avec le sol, sa rotation génère un couple de réaction 51 sur le balai. Le balai 2 est relié de manière rotative à un bras porte-balai 3 qui peut être construit comme montré à la figure 13, mais qui n'est pas limité à cette forme d'exécution. Le bras porte-balai 3 est pivotable autour d'un axe vertical par un pivot 53. Un vérin linéaire 54, par exemple un vérin électrique, est monté entre un premier pivot 55 qui est fixe vis-à-vis du châssis 10 de la balayeuse et un deuxième pivot 56 qui est fixe vis-à-vis d'un premier bras auxiliaire 57. Un vérin linéaire est un vérin qui peut agir dans deux directions linéaires opposées. Le vérin 54 est donc pivotable au moins autour des axes verticaux par rapport au châssis 10 et par rapport au premier bras auxiliaire 57. Le premier bras auxiliaire 57 est lui-même pivotable par l'intermédiaire d'un pivot 58 qui est coaxial avec le pivot 53, de sorte que le premier bras auxiliaire 57 est pivotable autour du même axe vertical que le bras porte-balai 3, mais indépendamment dudit bras porte-balai 3.

Dans la forme représentée à la figure 2a, le bras auxiliaire 57 s'étend des deux côtés du pivot 58. Le pivot 56 se trouve d'un côté du pivot 58. Du côté opposé, un point du premier bras auxiliaire 57 est relié à une des extrémités d'un premier ressort linéaire 59 qui est précontraint en traction. L'autre extrémité du ressort 59 est reliée à un support 60 qui est solidaire du bras porte-balai 3. Une butée 61 est montée entre le support 60 et le premier bras auxiliaire 57 de manière à limiter le rapprochement du bras 57 vers le support 60. Puisque le support 60 est solidaire au bras porte-balai 3, le ressort 59 et la butée 61 sont effectivement montés entre le premier bras auxiliaire 57 et le bras porte-balai 3. Un ressort additionnel 65 est monté entre le châssis 10 et un support flottant 66 qui n'est déplaçable qu'en direction horizontale. Ledit support flottant 66 est relié à un bras de support 67. Le premier bras auxiliaire 57 et le bras porte-balai 3 sont liés au bras de support 67 de sorte que le premier bras 57 et le bras porte-balai 3 sont pivotables (l'un indépendamment de l'autre) par rapport au bras de support 67. Le ressort 59 exerce une force de manière à maintenir le support 60 et le bras 57 en butée 61.

Le fonctionnement du système est expliqué sur base des figures 2b et 2c. La figure 2b représente le résultat d'une commande de l'opérateur pour ramener le balai 2 vers le châssis 10 afin de réduire la largeur de balayage. Pour ce faire, l'opérateur agit à l'aide d'une commande sur le vérin 54 de manière à étendre le vérin. Celui-ci va faire pivoter le premier bras auxiliaire 57 dans le sens antihoraire. La butée 61 qui est solidaire dudit bras 57 va pousser l'ensemble porte-balais 3 et balais 2 qui pivote également dans le sens antihoraire. La figure 2c, par rapport à la figure 2a, représente le résultat d'une commande de l'opérateur pour éloigner le balai 2 du châssis 10 afin d'augmenter la largeur de balayage. Pour ce faire, l'opérateur agit à l'aide d'une commande sur le vérin 54 de manière à raccourcir le vérin. Celui-ci va faire pivoter le premier bras auxiliaire 57 dans le sens horaire. Le premier ressort 59 et le couple de réaction 51 du balai 2 vont tirer le bras porte-balai 3 vers l'extérieur.

La fonction des deux ressorts 59 et 65 est également liée à l'absorption de chocs face à des obstacles rencontrés par le balai 2, tel qu'illustré aux figures 3a à 3c. La figure 3a illustre un obstacle latéral 70 rencontré quand le balai est dans la position de la figure 2c. Cet obstacle va repousser le bras porte-balai 3 et le balai 2 vers le châssis 10, par pivotement forcé du bras porte-balai 3 autour du pivot 53. Pour protéger le vérin 54, c'est le premier ressort 59 qui va s'étendre alors que le premier bras auxiliaire 57 reste immobile, pour éviter que le vérin 54 ne soit forcé et le pivot 53 va permettre la rotation du bras porte-balai 3 et du balai 2. Une fois que l'obstacle s'estompe, le premier ressort 59 et le couple de réaction 51 vont ramener le bras porte-balai 3 à sa position initiale sans intervention de l'opérateur.

La figure 3b illustre la présence d'un obstacle frontal 71. Cet obstacle va exercer un double effort sur les pivots 53 et 58 : un effort de rotation dans le sens horaire du bras 57 et du support 60 (par l'intermédiaire de la butée 61) et un effort de translation du bras de support 67 régulé par le ressort 65. Ce mécanisme protège le vérin 54. Le retrait de l'ensemble "bras 57 - bras 67 - bras porte-balais 3" donne le temps à l'opérateur de réagir et d'arrêter sa machine. De préférence, un capteur (non représenté) est placé au niveau du ressort 65. Ce capteur peut commander l'arrêt de la machine si l'opérateur ne réagit pas assez vite.

La figure 3c illustre la présence d'un obstacle 72 à la fois frontal et latéral. Cet obstacle va repousser le bras porte-balai 3 vers l'arrière et aussi le pousser vers le châssis 10. Pour protéger le vérin 54, le ressort 65 va se comprimer pour permettre au bras porte-balai 3 de reculer et le ressort 59 va s'étendre pour permettre au bras porte-balai 3 de rentrer vers le châssis 10. Ce retrait de l'ensemble "bras 57 - bras 67 - porte-balais 3" donne le temps à l'opérateur de réagir et d'arrêter sa machine. De préférence, le capteur déjà décrit peut également commander l'arrêt de la machine si l'opérateur ne réagit pas assez vite.

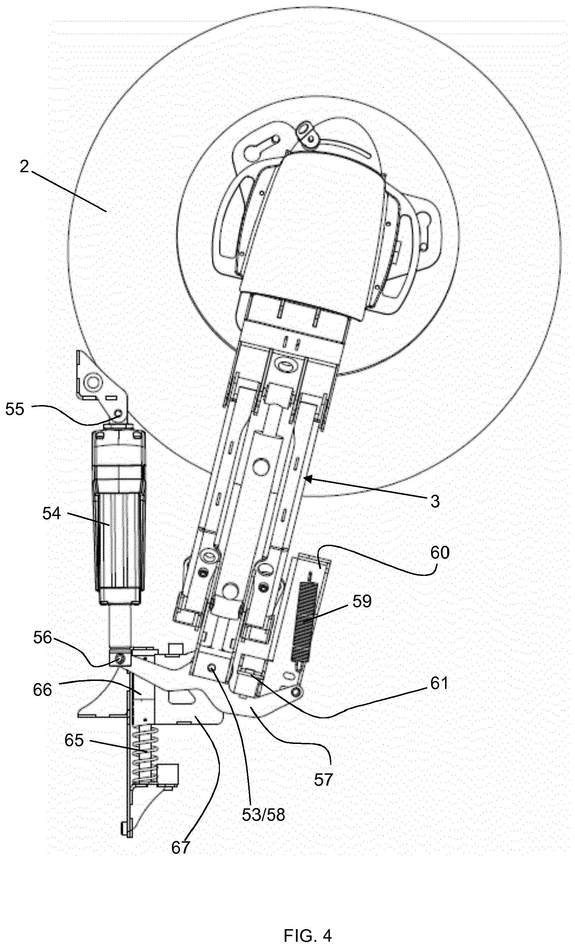

La figure 4 montre un mécanisme qui reprend les fonctionnalités décrites sur base des figures 2 et 3. Les mêmes repères numériques indiquent les mêmes composants du mécanisme décrit ci-dessus. Le bras porte-balai 3 est construit de manière telle que représentée aux figures 13a et 13b.

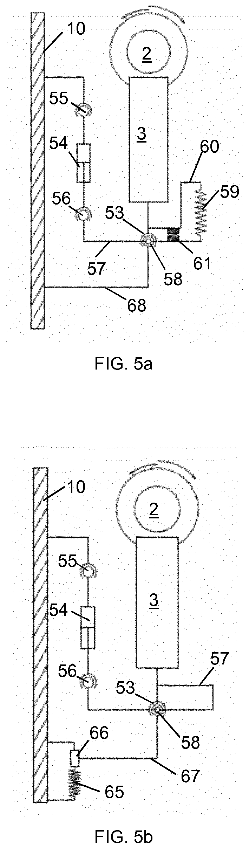

L'invention se rapporte également à une balayeuse pourvue d'au moins un des ressorts 59 ou 65. Ces formes d'exécution sont illustrées aux figures 5a et 5b. Dans le mécanisme de la figure 5a, le bras porte-balai 3 et le premier bras auxiliaire sont pivotables par rapport à un bras fixe 68, ce qui ne permet pas l'absorption de chocs frontaux de la manière décrite ci-dessus. Les chocs latéraux seront néanmoins absorbés par l'intervention telle que décrite du premier ressort 59. Dans le mécanisme de la figure 5b, le premier bras auxiliaire 57 est solidaire du bras porte-balai 3, ce qui ne permet pas l'absorption de chocs latéraux de la manière décrite ci-dessus. Les chocs frontaux seront néanmoins absorbés par l'intervention telle que décrite du ressort 65.

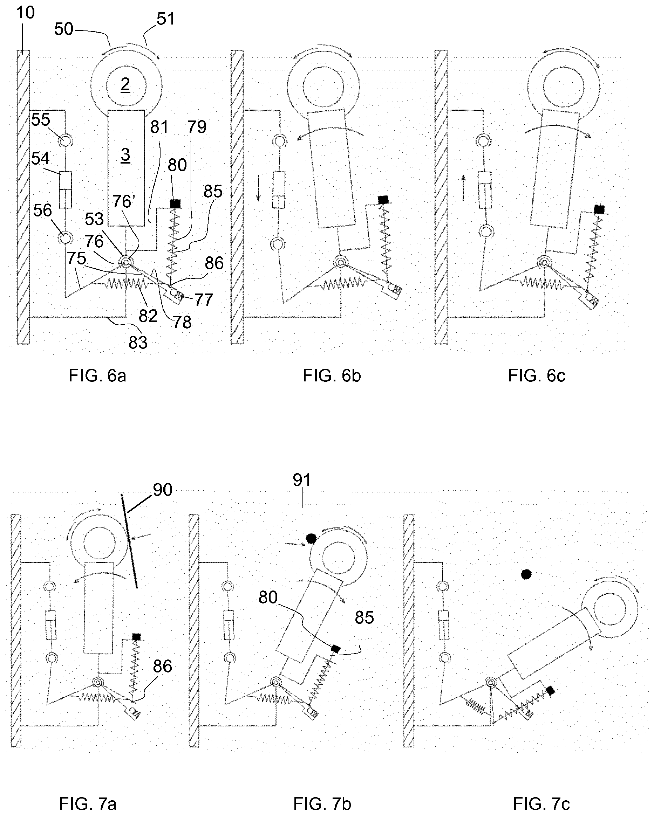

Une deuxième forme d'exécution est illustrée aux figures 6 et 7. On voit de nouveau le balai 2 maintenu par le bras porte-balai 3 qui est configuré pour pivoter autour d'un axe vertical au niveau du pivot 53. A nouveau, un vérin linéaire 54 est monté entre les pivots 55 et 56, ce dernier reliant le vérin 54 à un premier bras auxiliaire 75. Une extrémité du bras 75 est connectée au pivot 56, et le bras 75 peut également tourner autour du pivot 76, donc autour du même axe vertical que le bras porte-balai 3, mais indépendamment du bras porte-balai 3. Un poussoir à ressort 77 est fixé à l'autre extrémité du bras auxiliaire 75, de l'autre côté du pivot 76 par rapport au pivot 56. Un deuxième bras auxiliaire 78 possède un pivot 76' permettant une rotation autour du même axe vertical de rotation que le premier bras 75 et le bras porte-balai 3 mais indépendamment de ceux-ci. Le deuxième bras auxiliaire 78 est maintenu en contact avec le poussoir à ressort 77, servant de butée, grâce à l'action du premier ressort 82 reliant les bras 75 et 78. Le premier ressort 82 est précontraint en traction. Une tige 85 est connectée à une de ses extrémités au deuxième bras auxiliaire 78 par un pivot 86 et cette tige 85 traverse un support 81 qui est solidaire du bras porte-balai. La tige 85 peut coulisser par rapport au support 81. La tige 85 est munie d'un deuxième ressort linéaire 79 permettant d'écarter le bras 78 du support 81 et d'un bloc de retenue 80 à son autre extrémité empêchant la désolidarisation du bras 78 et du support 81. La tige 85 s'étend à l'intérieur du deuxième ressort 79 qui est attaché à la tige 85 à proximité du pivot 86 et qui est en appui sur le support 81. La butée obtenue grâce au poussoir à ressort 77 est supprimée dès qu'un effort trop important de rotation dans le sens horaire est appliqué par le bras 78 sur le poussoir à ressort 77. L'axe des pivots 76, 76' et 53 est solidaire du châssis 10, ce qui est symbolisé par la présence d'un bras fixe 83. Le deuxième ressort 79 est légèrement précontraint en compression dans la position de la figure 6a. Le poussoir à ressort peut également être fixé sur le bras auxiliaire 78 tout en conservant la même fonctionnalité.

Dans la présente invention, une butée représente une structure comprenant deux parties qui forment une connexion fixe ou non en fonction de la force exercée sur une des parties par rapport à l'autre. Dans sa forme classique, appelée ci-après 'butée en appui', telle que représentée aux figures 2 et 3, les parties de la butée sont montées en appui, de sorte que la connexion fixe est perdue dès que les parties sont soumises à une force qui éloigne les parties l'une par rapport à l'autre. Une autre forme de butée utilisable dans l'invention est une butée à ressort, dans laquelle les deux parties sont déconnectées dès qu'elles sont soumises à une force qui les éloigne l'une de l'autre, comme pour une butée en appui, et que dans la direction opposée, les parties sont solidaires entre elles, à condition que la force exercée sur une partie par rapport à l'autre reste en dessous d'une valeur prédéfinie, cette valeur étant déterminée par un ressort. Le poussoir à ressort 77 n'est qu'un exemple d'une butée du dernier type.

La figure 6b, par rapport à la figure 6a, représente le résultat d'une commande de l'opérateur pour ramener le balai 2 vers le châssis 10 afin de réduire la largeur de balayage. Pour ce faire, l'opérateur agit à l'aide d'une commande sur le vérin 54 de manière à étendre le vérin. Celui-ci va faire pivoter le premier bras auxiliaire 75 dans le sens antihoraire. Le deuxième-bras 78 est lui conduit par le poussoir à ressort 77 solidaire du premier bras 75. Le bras porte-balai 3 sera lui poussé par le deuxième ressort 79 qui exerce une force sur le support 81.

La figure 6c, par rapport à la figure 6a, représente le résultat d'une commande de l'opérateur pour écarter le balai du châssis afin d'augmenter la largeur de balayage. Pour ce faire, l'opérateur agit à l'aide d'une commande sur le vérin 54 de manière à raccourcir le vérin. Celui-ci va faire pivoter le premier bras auxiliaire 75 dans le sens horaire. Le deuxième bras auxiliaire 78 est lui maintenu en contact avec le poussoir à ressort 77 par le ressort 82 reliant les bras 78 et 75. Le bras porte-balai 3 sera tiré par le bloc de retenue 80 qui exerce une force sur le support 81.

Les figures 7a-7c représentent les réactions du mécanisme commandant le bras porte-balai 3 lorsque des obstacles surviennent, la situation de départ étant représentée par la figure 6c. La figure 7a illustre la présence d'un obstacle latéral 90. Cet obstacle va repousser le bras porte-balai 3 vers le châssis 10. Pour protéger le vérin 54, le poussoir à ressort 77 est configuré pour être déconnecté grâce à la force exercée par l'obstacle. Le deuxième bras auxiliaire 78 va perdre momentanément le contact avec le poussoir à ressort 77, ce qui permet au bras 78, à la tige 85, au support 81 et au bras porte-balai 3 de pivoter indépendamment du premier bras 75. Le premier ressort 82 va lui s'étirer. Une fois que l'obstacle s'estompe, le ressort 82 va ramener le deuxième bras auxiliaire 78 en contact avec le poussoir à ressort 77. Aidé du couple de réaction 51, le deuxième bras 78, en revenant, va tirer, avec la tige 85 et le bloc de retenue 80, le bras porte-balai 3 vers l'extérieur pour le ramener à sa position initiale sans intervention de l'opérateur.

La figure 7b illustre le début de la réaction du mécanisme face à la présence d'un obstacle représenté ici par un poteau 91, qui va écarter le bras porte-balai 3 du châssis 10. Pour protéger le vérin 54, c'est le deuxième ressort 79 qui est comprimé par le support 81 pour permettre au bras porte-balai 3 de s'écarter du châssis 10. L'ensemble des bras auxiliaires 75 et 78 restent immobiles. La figure 7c illustre la suite de la réaction du mécanisme. A un moment, la force exercée par le deuxième ressort 79 comprimé sur le deuxième bras auxiliaire 78 va rompre le poussoir à ressort 77 et donc désolidariser les bras 75 et 78, permettant au deuxième bras 78 de pivoter vers l'arrière pendant que le premier bras 75 reste immobile. Le bras porte-balai 3 est ainsi ramené suffisamment en arrière pour protéger le mécanisme de tout dégât. Un capteur (non-représenté) peut être placé au niveau du poussoir à ressort 77. Ce capteur peut commander l'arrêt de la machine si l'opérateur ne réagit pas assez vite. Pour remettre le bras porte-balai 3 en position de travail, l'opérateur devra manuellement le faire pivoter vers le châssis 10. Le bras porte-balai 3 tirera avec lui le deuxième bras 78. Une fois que celui-ci aura dépassé le poussoir à ressort 77, le mécanisme sera à nouveau opérationnel.

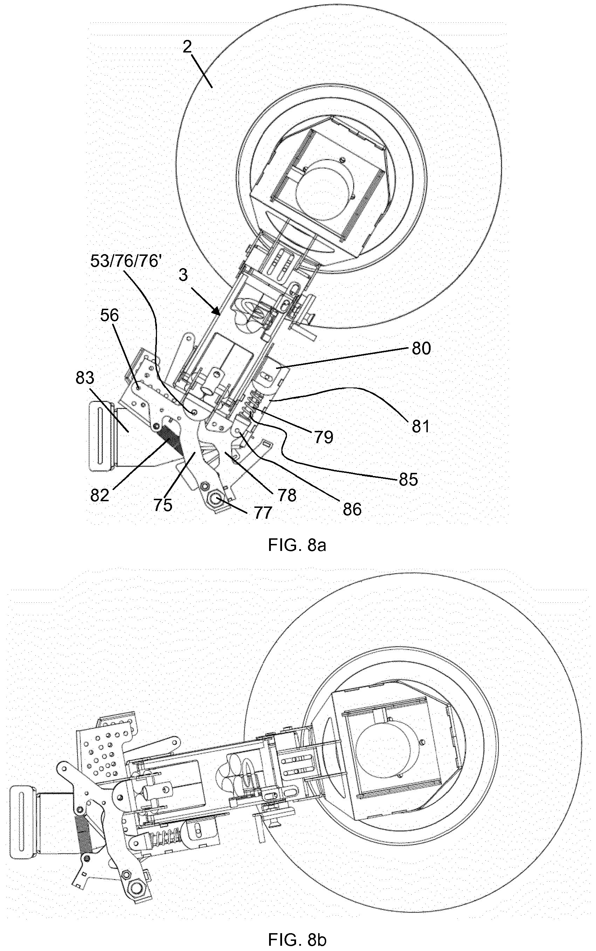

Les figures 8a et 8b montrent un mécanisme qui reprend les fonctionnalités illustrées aux figures 6 et 7. Les deux situations montrées aux figures 8a et 8b correspondent aux situations représentées aux figures 7b et 7c. Le vérin 54 n'y est pas représenté. On voit que les bras auxiliaires 75 et 78 sont différents, mais que la fonctionnalité décrite ci-dessus est bien reprise par le mécanisme montré. On voit aussi que le poussoir 77 à ressort sert de butée au bras 75 et 78 en exerçant une force verticale. Enfin, on voit que la tige 85 qui est entourée par le deuxième ressort 79 n'est pas solidaire du deuxième bras 78 mais que cette tige est pivotable par rapport au deuxième bras via le pivot 86. Le mécanisme décrit ci-dessus sur base des figures 6 à 8 peut être combiné sur la même machine avec l'un des mécanismes montrés aux figures 2 à 5.

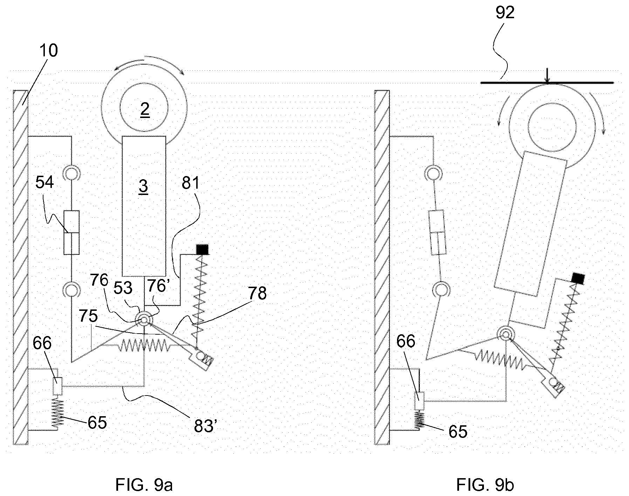

Les figures 9a et 9b représentent la forme d'exécution des figures 6 et 7, pourvue d'un ressort additionnel 65 entre le châssis 10 et un support flottant 66 qui n'est déplaçable qu'en direction horizontale et sur lequel un bras de support 83' est fixé. Le premier bras auxiliaire 75, le deuxième bras auxiliaire 78 et le bras porte-balai 3 sont liés au bras de support 83' de sorte que le premier bras 75, le deuxième bras et le bras porte-balai 3 sont pivotables (l'un indépendamment de l'autre) par rapport au bras de support 83'. La fonctionnalité du ressort 65 est la même que pour la forme des figures 2 et 3, notamment l'absorption de chocs frontaux et de chocs à la fois frontaux et latéraux. Comme illustré à la figure 9b, un obstacle frontal 92 va exercer un double effort sur les pivots 53, 76 et 76' : un effort de rotation dans le sens horaire des bras 75, 80 et 78 et un effort de translation du bras 83' régulé par le ressort 65. Ce mécanisme protège le vérin 54. Le retrait de l'ensemble "bras 75 - bras 80/78 - bras porte-balais 3" donne le temps à l'opérateur de réagir et d'arrêter sa machine. De préférence, un capteur (non représenté) est placé au niveau du ressort 65. Ce capteur peut commander l'arrêt de la machine si l'opérateur ne réagit pas assez vite.

La forme d'exécution montrée aux figures 9a et 9b est également capable d'absorber des chocs générés par un obstacle à la fois frontal et latéral tel que l'obstacle 72 montré à la figure 3c. Cet obstacle va repousser le bras porte-balai 3 vers l'arrière mais aussi le pousser vers le châssis 10. Pour protéger le vérin 54, le ressort 65 va se comprimer pour permettre au bras porte-balai 3 de reculer. Le poussoir à ressort 77 permet au ressort 82 de s'étendre pour permettre au bras porte-balai 3 de rentrer vers le châssis 10. Ce retrait de l'ensemble "bras 75 - bras 78 - porte-balais 3" donne le temps à l'opérateur de réagir et d'arrêter sa machine. De préférence, le capteur déjà décrit peut également commander l'arrêt de la machine si l'opérateur ne réagit pas assez vite.

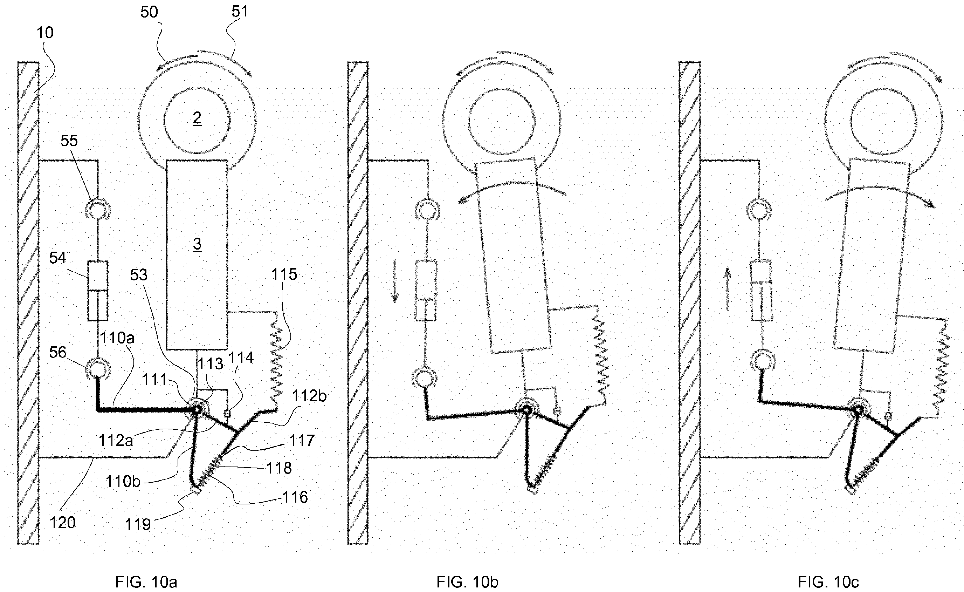

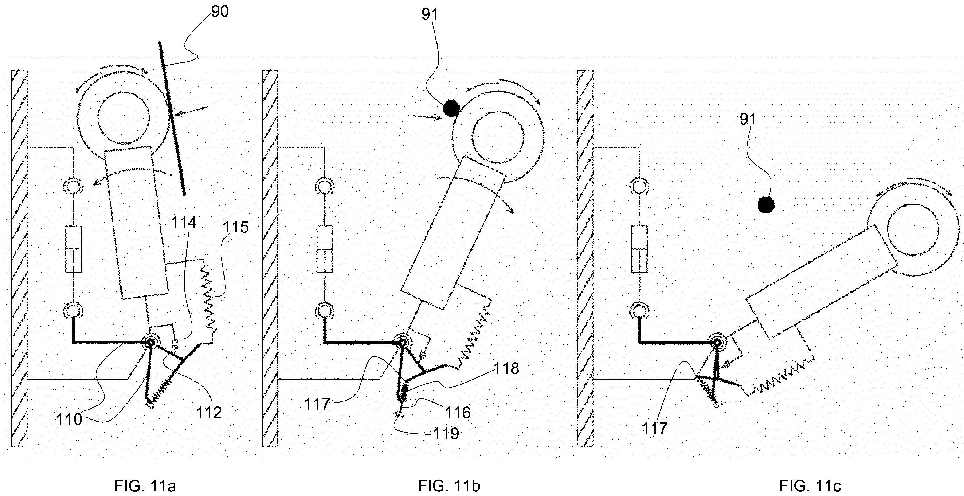

Aux figures 10 et 11, une troisième forme d'exécution est représentée d'un mécanisme selon l'invention qui permet le réglage de la position des balais 2 dans le plan horizontal. On voit de nouveau le balai 2 maintenu par le bras porte-balai 3 qui est configuré pour pivoter autour d'un axe vertical au niveau du pivot 53. Comme précédemment, les directions de la rotation du balai 2 et de la force de réaction sont indiquées par les références 50 et 51. A nouveau, un vérin linéaire 54 est monté entre les pivots 55 et 56, ce dernier reliant le vérin 54 à un premier bras auxiliaire 110. Le bras 110 comprend deux parties 110a et 110b solidaires reliées entre elles au niveau d'un pivot 111 qui est coaxial avec le pivot 53. En d'autres mots, le bras 110 peut pivoter autour du même axe vertical que le bras porte-balai 3, mais indépendamment dudit bras porte-balai 3. La première partie 110a est reliée au pivot 56. On a prévu un deuxième bras auxiliaire 112 qui est pivotable via un pivot 113 qui est coaxial avec les pivots 53 et 111. Le deuxième bras 112 est donc pivotable autour du même axe vertical que le premier bras auxiliaire 110 et le bras porte-balai 3 mais indépendamment de ceux-ci. Dans la forme représentée à la figure 10, le deuxième bras auxiliaire 112 comprend une partie principale 112a et une partie transversale 112b. Une butée en appui 114 est montée entre la partie principale 112a et le bras porte-balai 3. Une extrémité de la partie transversale 112b est reliée au bras porte-balai 3 par un premier ressort linéaire 115, précontraint en traction. L'autre extrémité de la partie transversale 112b est connectée à une tige 116 par un pivot 117. La tige 116 se trouve à l'intérieur d'un deuxième ressort linéaire 118 dont une extrémité est attachée à la tige 116 à proximité du pivot 117 et l'autre extrémité est en appui sur la deuxième partie 110b du premier bras auxiliaire 110. Le deuxième ressort 118 est précontraint en compression. La tige 116 est montée de manière coulissante par rapport à la deuxième partie 110b du premier bras 110 et elle est pourvue d'un bloc de retenue 119 qui limite le mouvement de la tige 116 par rapport à ladite deuxième partie 110b du premier bras. L'axe des pivots 53, 111 et 113 est solidaire du châssis 10, ce qui est symbolisé par la présence d'un bras fixe 120. Selon une forme d'exécution équivalente, le deuxième bras 112 peut comprendre une seule partie, notamment la partie 112a, reliée directement à la tige 116 et au ressort 115.

La figure 10b, par rapport à la figure 10a, représente le résultat d'une commande de l'opérateur pour ramener le balai 2 vers le châssis 10 afin de réduire la largeur de balayage. Pour ce faire, l'opérateur agit à l'aide d'une commande sur le vérin 54 de manière à étendre le vérin. Celui-ci va faire pivoter le premier bras auxiliaire 110 dans le sens antihoraire. Le premier bras 110 va pousser le deuxième bras 112 via le deuxième ressort 118. Le deuxième bras 112 va à son tour pousser le bras porte-balai 3 via la butée 114.

La figure 10c, par rapport à la figure 10a, représente le résultat d'une commande de l'opérateur pour écarter le balai 2 du châssis 10 afin d'augmenter la largeur de balayage. Pour ce faire, l'opérateur agit à l'aide d'une commande sur le vérin 54 de manière à raccourcir le vérin. Celui-ci va faire pivoter le premier bras auxiliaire 110 dans le sens horaire. Le premier bras auxiliaire 110 va tirer vers lui le deuxième bras auxiliaire 112 via la tige 116 à l'intérieur du deuxième ressort 118, et son bloc de retenue 119. Le premier ressort 115 exerce une force de traction qui a l'effet de tirer le bras porte-balai 3 vers l'extérieur, aidé par le couple de réaction 51. Lors de ce mouvement, la position du bras porte-balai 3 par rapport au deuxième bras auxiliaire 112 est maintenue par la butée 114.

Les figures 11a-11c représentent les réactions du mécanisme commandant le bras porte-balai 3 lorsque des obstacles surviennent, à partir de la situation représentée à la figure 10a. La figure 11a illustre la présence d'un obstacle latéral 90. Cet obstacle va repousser le bras porte-balai 3 vers le châssis 10. Le bras porte-balai 3 va pivoter dans le sens contraire par rapport à l'obstacle, en dégageant la butée 114 et en étendant le ressort 115 Les bras auxiliaires 110 et 112 restent immobiles, de manière à protéger le vérin 54. Une fois que l'obstacle s'estompe, le ressort 115 ramène le bras porte-balai 3 en butée 114, sans intervention de l'opérateur.

La figure 11b illustre le début de la réaction du mécanisme face à la présence d'un obstacle, représenté ici par un poteau 91, qui va écarter le bras porte-balai 3 du châssis 10. Le bras porte-balai 3, via la butée 114, va faire pivoter le deuxième bras auxiliaire 112 en arrière. Ce mouvement est possible par la présence du pivot 117 entre le deuxième bras 112 et la tige 116 à l'intérieur du deuxième ressort 118. Le premier bras auxiliaire 110 reste immobile puisqu'il n'y pas de mise en action du vérin 54. Par conséquent, le pivotement du deuxième bras 112 va comprimer le ressort 118, comme illustré à la figure 11b. L'angle augmentant (fig. 11c), le ressort 118 va dépasser son point minimum et se détendre en tirant le deuxième bras 112 en arrière. Grâce au premier ressort 115, le bras porte-balai 3 va le suivre et se dégager de l'obstacle. Le bras porte-balai 3 est ainsi ramené suffisamment en arrière pour protéger le mécanisme de tout dégât. Une fois l'obstacle disparu, l'opérateur ramènera vers l'avant le bras porte-balai 3. Le ressort 118 se comprimera au début et se retendra une fois dépassé sa position minimale. Le mécanisme sera à nouveau opérationnel.

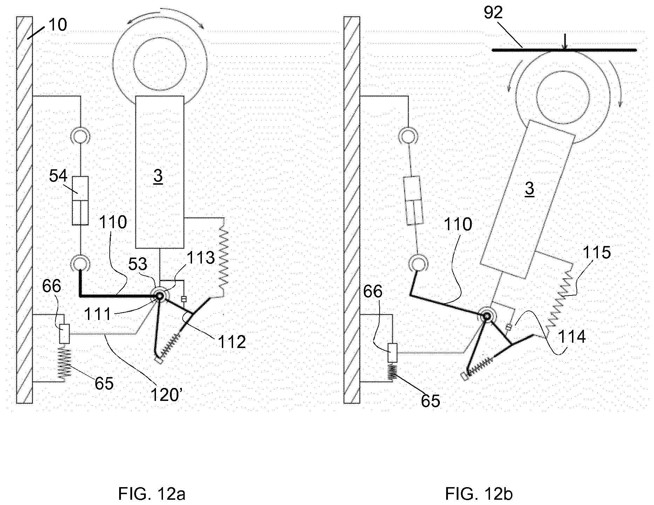

Les figures 12a et 12b représentent la forme d'exécution des figures 10 et 11, pourvue d'un ressort additionnel 65 entre le châssis 10 et un support flottant 66 qui n'est déplaçable qu'en direction horizontale et sur lequel un bras de support 120' est fixé. Le premier bras auxiliaire 110, le deuxième bras auxiliaire 112 et le bras porte-balai 3 sont liés au bras de support 120' de sorte que le premier bras 110, le deuxième bras 112 et le bras porte-balai 3 sont pivotables (l'un indépendamment de l'autre) par rapport au bras de support 120'. La fonctionnalité du ressort 65 est la même que pour la forme des figures 2, 3 et 9, notamment l'absorption de chocs frontaux et de chocs à la fois frontaux et latéraux. Comme illustré à la figure 12b, un obstacle frontal 92 va exercer un double effort sur les pivots 53, 111 et 113 : un effort de rotation dans le sens horaire des bras 110 et 112 et un effort de translation du bras 120' régulé par le ressort 65. Ce mécanisme protège le vérin 54. Le retrait de l'ensemble "bras 110 - bras 112 - bras porte-balais 3" donne le temps à l'opérateur de réagir et d'arrêter sa machine. De préférence, un capteur (non représenté) est placé au niveau du ressort 65. Ce capteur peut commander l'arrêt de la machine si l'opérateur ne réagit pas assez vite.

La forme d'exécution montrée aux figures 12a et 12b est également capable d'absorber des chocs générés par un obstacle à la fois frontal et latéral tel que l'obstacle 72 montré à la figure 3c. Cet obstacle va repousser le bras porte-balai 3 vers l'arrière mais aussi le pousser vers le châssis 10. Pour protéger le vérin 54, le ressort 65 va se comprimer pour permettre au bras porte-balai 3 de reculer. Le ressort 115 va s'étendre pour permettre au bras porte-balai 3 de rentrer vers le châssis 10. Ce retrait de l'ensemble "bras 110 - bras 112 - porte-balais 3" donne le temps à l'opérateur de réagir et d'arrêter sa machine. De préférence, le capteur déjà décrit peut également commander l'arrêt de la machine si l'opérateur ne réagit pas assez vite.

Un élément en commun entre les formes d'exécution décrites ci-dessus est la présence d'un premier bras auxiliaire (57,75,110), un premier ressort (59,82,115) de préférence un ressort linéaire précontraint en traction et une butée (61,77,114). Le premier bras auxiliaire peut avoir différentes formes selon la forme de l'exécution. Indépendamment de la forme d'exécution, le premier bras auxiliaire est relié au bras porte-balai 3 par le premier ressort linéaire et par la butée qui peut prendre la forme d'une butée en appui ou d'une butée à ressort, par exemple un poussoir à ressort. Le premier ressort et la butée sont configurés pour maintenir une position constante du bras porte-balai par rapport au premier bras auxiliaire lors de la mise en action du vérin 54 dans l'une ou l'autre direction linéaire, ladite mise en action générant une rotation de l'ensemble du premier bras auxiliaire et du bras porte-balai dans une des deux directions rotatives autour d'un axe essentiellement vertical. Dans le cas d'une force extérieure latérale qui pousse le bras porte-balai vers l'intérieur de la balayeuse, le premier ressort va permettre un pivotement du balai vers le châssis, sans pivotement du premier bras auxiliaire, de manière à éviter que le vérin 54 soit forcé. Dans un nombre de formes d'exécution, le système comprend en outre un deuxième bras auxiliaire (78,112) et un deuxième ressort (79,118), de préférence un ressort linéaire précontraint en compression, configurés pour permettre l'absorption de forces latérales qui tendent à éloigner le bras porte-balai du châssis de la balayeuse, sans forcer le vérin 54. Le ressort 65 et le support flottant 66 peuvent être ajoutés à n'importe quelle forme d'exécution selon l'invention, pour l'absorption de chocs frontaux et de chocs à la fois frontaux et latéraux.

Le terme 'pivot' est utilisé plusieurs fois dans cette description. Les pivots 53, 58, 76, 76', 111 et 113 sont des pivots qui permettent la rotation des éléments respectifs, notamment le bras porte-balai 3, le premier bras auxiliaire (57, 75, 110) et le deuxième bras auxiliaire (78, 112) autour d'un axe essentiellement vertical. L'invention n'exclut néanmoins pas des formes d'exécution dans lesquelles cet axe serait libre de pivoter de manière limitée autour d'un ou plusieurs axes transversaux par rapport à l'axe essentiellement vertical, ni des formes d'exécution dans lesquelles les éléments cités ci-dessus auraient un degré de flexibilité de mouvement par rapport à l'axe essentiellement vertical. Un ou plusieurs des pivots 55, 56, 86 et 117 peuvent être réalisés comme des pivots permettant une rotation autour d'un axe essentiellement vertical, ou comme des joints universels, c'est-à-dire des pivots permettant une rotation autour de plusieurs axes.

## Revendications

1. Balayeuse comprenant un châssis (10), au moins trois roues (5), un moteur de propulsion, une cabine (1) pour le conducteur, un ou plusieurs balais (2), chaque balai pouvant effectuer une rotation par rapport à une armature (19) montée à l'extrémité d'un bras porte-balai (3) qui s'étend devant et/ou à la périphérie de la cabine, ainsi que des moyens d'aspiration et de collecte de déchets et dans laquelle chacun des bras porte-balai (3) est pourvu d'un mécanisme configuré pour pivoter le bras porte-balai autour d'un axe essentiellement vertical, ledit mécanisme comprenant un vérin linéaire (54) et un premier bras auxiliaire (57, 75, 110), le vérin (54) étant monté entre deux pivots (55, 56), un des deux pivots (55) étant relié au châssis (10) et l'autre pivot (56) étant relié au premier bras auxiliaire (57, 75, 110), **caractérisée en ce que** le premier bras auxiliaire (57, 75,110) est pivotable autour du même axe essentiellement vertical que le bras porte-balai (3) mais indépendamment de celui-ci,
• le premier bras auxiliaire (57, 75, 110) et le bras porte-balai (3) sont reliés entre eux au moins par un premier ressort (59, 82, 115) et par une butée (61, 77, 114), configurés pour maintenir une position constante du bras porte-balai (3) par rapport au premier bras auxiliaire lors de la mise en action du vérin (54) dans l'une ou l'autre direction linéaire, ladite mise en action générant une rotation de l'ensemble du premier bras auxiliaire (57, 75, 110) et du bras porte-balai (3) dans une des deux directions rotatives,
• en cas de présence d'une force extérieure latérale agissant sur le balai (2), le poussant vers l'intérieur de la balayeuse, le premier ressort (59, 82, 115) permet un pivotement du bras porte-balai (3) vers le châssis (10), sans pivotement du premier bras auxiliaire (57).

2. La balayeuse selon la revendication 1, comprenant un support (60) qui est solidaire du bras porte-balai (3), et dans lequel un point du premier bras auxiliaire (57) qui se trouve de l'autre côté dudit axe essentiellement vertical par rapport au vérin (54), est relié à une des extrémités du premier ressort (59), l'autre extrémité dudit premier ressort (59) étant reliée au support (60) qui est solidaire du bras porte-balai (3), et dans lequel le déplacement du premier bras auxiliaire (57) vers le support (60) est limité par la butée (61) qui est une butée en appui, de sorte que la mise en action du vérin (54) dans l'une ou l'autre direction linéaire génère une rotation du premier bras auxiliaire (57) dans une des deux directions rotatives, le premier bras auxiliaire (57) entraînant le bras porte-balai (3) à l'aide de la butée (61) ou à l'aide du premier ressort (59).

3. La balayeuse selon la revendication 1 comprenant en outre un deuxième ressort (79), un support (81) qui est solidaire du bras porte-balai (3), un deuxième bras auxiliaire (78), et dans laquelle la butée (77) est une butée à ressort, le deuxième bras auxiliaire (78) étant pivotable autour du même axe essentiellement vertical que le bras porte-balai (3) et le premier bras auxiliaire (75) mais indépendamment de ceux-ci, le premier ressort (82) étant monté entre le premier et le deuxième bras auxiliaire (75,78), la butée à ressort (77) et le premier ressort (82) étant configurés pour être aptes à maintenir les deux bras auxiliaires (75,78) solidaires l'un de l'autre tant que la butée à ressort (77) n'est pas rompue, le deuxième ressort (79) étant relié par une de ses extrémités à une tige (85) qui est reliée au deuxième bras auxiliaire (78) par un pivot (86), le deuxième ressort (79) appuyant par sa deuxième extrémité sur le support (81), le deuxième ressort (79) entourant ladite tige (85), ladite tige (85) traversant le support (81) et étant pourvue d'un bloc de retenue (80) qui empêche la désolidarisation de ladite tige (85) et du support (81),
de sorte que :
• la mise en action du vérin (54) dans l'une ou l'autre direction linéaire génère une rotation du premier bras auxiliaire (75) dans une des deux directions rotatives, le premier bras auxiliaire (75) entraînant le bras porte-balai (3) à l'aide du bloc de retenue (80) ou à l'aide du deuxième ressort (79),
• la butée à ressort (77) et le premier ressort (82) sont configurés pour maintenir la solidarité entre les bras auxiliaires (75,78) lors de la mise en action du bras porte-balai par le vérin (54),
• la butée à ressort (77) est configurée pour être rompue par des forces latérales ou frontales d'un niveau prédéfini, exercées sur le bras porte-balai (3), de sorte que le bras porte balai peut temporairement pivoter par rapport au premier bras auxiliaire (75), sans forcer le vérin (54).

4. La balayeuse selon la revendication 3, dans laquelle en cas de présence d'une force latérale qui tend à éloigner le bras porte-balai (3) du châssis (10), le deuxième ressort (79) est comprimé permettant une rotation du bras porte-balai par rapport au premier bras auxiliaire (75), ce dernier restant immobile, et dans laquelle ladite compression du deuxième ressort (79) est configurée pour continuer jusqu'à ce qu'elle rompt la butée à ressort (77), permettant ainsi au premier ressort (82) de tirer le bras porte-balai (3) vers l'arrière.

5. La balayeuse selon l'une des revendications 3 et 4, dans laquelle la butée est un poussoir à ressort (77).

6. La balayeuse selon la revendication 1, dans laquelle le premier bras auxiliaire (110) comprend une première partie (110a) d'un côté de l'axe essentiellement vertical et une deuxième partie (110b) de l'autre côté dudit axe essentiellement vertical, la première partie (110a) étant reliée au deuxième pivot (56), la balayeuse comprenant en outre un deuxième bras auxiliaire (112) qui est pivotable autour du même axe essentiellement vertical que le bras porte-balai (3) et le premier bras auxiliaire (110) mais indépendamment de ceux-ci, le premier ressort (115) ainsi que la butée (114) qui est une butée en appui, étant montés entre le deuxième bras auxiliaire (112) et le bras porte-balai (3), un deuxième ressort (118) étant monté entre la deuxième partie (110b) du premier bras auxiliaire et le deuxième bras auxiliaire (112), le deuxième ressort (118) étant relié par la première de ses deux extrémités à une tige (116) qui s'étend à l'intérieur du deuxième ressort (118), ladite tige (116) étant reliée au deuxième bras auxiliaire (112) par un pivot (117), le deuxième ressort s'appuyant par sa deuxième extrémité sur la deuxième partie (110b) du premier bras auxiliaire, la tige (116) étant coulissante par rapport au premier bras auxiliaire (110) et la tige (116) comprenant un bloc de retenue (119) qui empêche la désolidarisation de la tige du premier bras auxiliaire (110), de sorte que :
• la mise en action du vérin (54) dans l'une ou l'autre direction linéaire génère une rotation du premier bras auxiliaire (110) dans une des deux directions rotatives, le premier bras auxiliaire (110) entraînant le bras porte-balai (3) à l'aide de la butée (114) ou à l'aide du premier ressort (115),
• en cas de présence d'une force latérale qui tend à éloigner le bras porte-balai (3) du châssis (10) :
∘ le deuxième ressort (118) est d'abord comprimé, permettant au deuxième bras auxiliaire (112) de pivoter par rapport au premier bras (110), sans forcer le vérin (54),
∘ quand le deuxième ressort (118) atteint un niveau de compression prédéfini, ce ressort se détend, en tirant le bras porte-balai (3) en arrière.

7. La balayeuse selon l'une quelconque des revendications précédentes, comprenant en outre un ressort additionnel (65) monté entre le châssis (10) et une structure (66) déplaçable dans la direction horizontale, ladite structure déplaçable étant reliée à un bras de support (67, 83', 120'), le bras porte-balai (3) et le premier bras auxiliaire (57, 75, 110) étant reliés au bras de support de sorte que :
• le bras porte-balai (3) et le premier bras auxiliaire (57, 75, 110) sont pivotables par rapport au bras de support (67, 83', 120'), autour dudit axe essentiellement vertical,
• le ressort additionnel (65) est configuré pour absorber les chocs frontaux exercés sur le bras porte-balai (3).

8. Balayeuse comprenant un châssis (10), au moins trois roues (5), un moteur de propulsion, une cabine (1) pour le conducteur, un ou plusieurs balais (2), chaque balai pouvant effectuer une rotation par rapport à une armature (19) montée à l'extrémité d'un bras porte-balai (3) qui s'étend devant et/ou à la périphérie de la cabine, ainsi que des moyens d'aspiration et de collecte de déchets, et dans laquelle chacun des bras porte-balai (3) est pourvu d'un mécanisme configuré pour pivoter le bras porte-balai autour d'un axe essentiellement vertical, ledit mécanisme comprenant un vérin linéaire (54) et un premier bras auxiliaire (57, 75, 110), le vérin (54) étant monté entre deux pivots (55, 56), un des deux pivots (55) étant relié au châssis (10) et l'autre pivot (56) étant relié au premier bras auxiliaire (57, 75, 110), **caractérisée en ce que** le premier bras auxiliaire (57, 75, 110) est pivotable autour du même axe essentiellement vertical que le bras porte-balai (3) mais indépendamment de celui-ci, la balayeuse comprend en outre un ressort (65) monté entre le châssis (10) et une structure (66) déplaçable en direction horizontale, ladite structure déplaçable étant reliée à un bras de support (67, 83', 120'), le bras porte-balai (3) et le premier bras auxiliaire (57, 75, 110) étant reliés au bras de support de sorte que :
• le bras porte-balai (3) et le premier bras auxiliaire (57, 75, 110) sont pivotables par rapport au bras de support (67, 83', 120') autour dudit axe essentiellement vertical,
• le ressort (65) est configuré pour absorber les chocs frontaux exercés sur le bras porte-balai (3).

## Patentansprüche

1. Kehrmaschine, umfassend ein Fahrgestell (10), mindestens drei Räder (5), einen Antriebsmotor, eine Kabine (1) für den Fahrer, einen oder mehrere Besen (2), wobei jeder Besen eine Drehung mit Bezug auf ein Gerüst (19) durchführen kann, das am Ende eines Besenhaltearms (3) montiert ist, der sich vor und/oder am Umfang der Kabine erstreckt, ebenso wie Mittel zum Ansaugen und Sammeln von Abfall, und wobei jeder der Besenhaltearme (3) mit einem Mechanismus versehen ist, der konfiguriert ist, um den Besenhaltearm um eine im Wesentlichen vertikale Achse schwenken zu lassen, wobei der besagte Mechanismus einen Linearantriebszylinder (54) und einen ersten Hilfsarm (57, 75, 110) umfasst, wobei der Antriebszylinder (54) zwischen zwei Drehpunkten (55, 56) montiert ist, wobei einer der zwei Drehpunkte (55) mit dem Fahrgestell (10) verbunden ist und der andere Drehpunkt (56) mit dem ersten Hilfsarm (57, 75, 110) verbunden ist, **dadurch gekennzeichnet, dass** der erste Hilfsarm (57, 75,110) um die gleiche im Wesentlichen vertikale Achse wie der Besenhaltearm (3), jedoch unabhängig davon, schwenkbar ist,
- der erste Hilfsarm (57, 75, 110) und der Besenhaltearm (3) untereinander mindestens durch eine erste Feder (59, 82, 115) und durch einen Anschlag (61, 77, 114) verbunden sind, die konfiguriert sind, um eine konstante Position des Besenhaltearms (3) mit Bezug auf den ersten Hilfsarm bei der Inbetriebnahme des Antriebszylinders (54) in der einen oder der anderen linearen Richtung beizubehalten, wobei die besagte Inbetriebnahme eine Drehung der Gesamtheit des ersten Hilfsarms (57, 75, 110) und des Besenhaltearms (3) in eine der zwei Drehrichtungen erzeugt,
- für den Fall des Vorhandenseins einer seitlichen äußeren Kraft, die auf den Besen (2) wirkt, die ihn hin zur Innenseite der Kehrmaschine schiebt, ermöglicht die erste Feder (59, 82, 115) ein Schwenken des Besenhaltearms (3) hin zum Fahrgestell (10), ohne Schwenken des ersten Hilfsarms (57).

2. Die Kehrmaschine nach Anspruch 1, umfassend eine Stütze (60), die fest mit dem Besenhaltearm (3) verbunden ist, und wobei ein Punkt des ersten Hilfsarms (57), der sich auf der anderen Seite der im Wesentlichen vertikalen Achse mit Bezug auf den Antriebszylinder (54) befindet, mit einem der Enden der ersten Feder (59) verbunden ist, wobei das andere Ende der ersten Feder (59) mit der Stütze (60) verbunden ist, die fest mit dem Besenhaltearm (3) verbunden ist, und wobei die Verschiebung des ersten Hilfsarms (57) hin zur Stütze (60) durch den Anschlag (61) begrenzt ist, wobei es sich um einen Anschlag in Auflage handelt, so dass die Inbetriebnahme des Antriebszylinders (54) in der einen oder der anderen linearen Richtung eine Drehung des ersten Hilfsarms (57) in eine der zwei Drehrichtungen erzeugt, wobei der erste Hilfsarm (57) den Besenhaltearm (3) mit Hilfe des Anschlags (61) oder mit Hilfe der ersten Feder (59) mitführt.

3. Die Kehrmaschine nach Anspruch 1, umfassend außerdem eine zweite Feder (79), eine Stütze (81), die fest mit dem Besenhaltearm (3) verbunden ist, einen zweiten Hilfsarm (78), und wobei der Anschlag (77) ein Anschlag mit Feder ist, wobei der zweite Hilfsarm (78) um die gleiche im Wesentlichen vertikale Achse wie der Besenhaltearm (3) und der erste Hilfsarm (75), jedoch unabhängig von diesen, schwenkbar ist, wobei die erste Feder (82) zwischen dem ersten und dem zweiten Hilfsarm (75, 78) montiert ist, wobei der Anschlag mit Feder (77) und die erste Feder (82) konfiguriert sind, um dazu in der Lage zu sein, die zwei Hilfsarme (75, 78) fest miteinander verbunden zu halten, solange der Anschlag mit Feder (77) nicht durchbrochen ist, wobei die zweite Feder (79) mit einem ihrer Enden mit einem Stift (85) verbunden ist, der mit dem zweiten Hilfsarm (78) durch einen Drehpunkt (86) verbunden ist, wobei die zweite Feder (79) durch ihr zweites Ende auf der Stütze (81) aufliegt, wobei die zweite Feder (79) den besagten Stift (85) umgibt, wobei der besagte Stift (85) die Stütze (81) quert und mit einem Rückhalteblock (80) versehen ist, der die Entkoppelung des besagten Stifts (85) und der Stütze (81) verhindert, so dass:
- die Inbetriebnahme des Antriebszylinders (54) in der einen oder der anderen linearen Richtung eine Drehung des ersten Hilfsarms (75) in eine der zwei Drehrichtungen erzeugt, wobei der erste Hilfsarm (75) den Besenhaltearm (3) mit Hilfe des Rückhalteblocks (80) oder mit Hilfe der zweiten Feder (79) mitführt,
- der Anschlag mit Feder (77) und die erste Feder (82) konfiguriert sind, um die feste Verbindung zwischen den Hilfsarmen (75, 78) bei der Inbetriebnahme des Besenhaltearms durch den Antriebszylinder (54) beizubehalten,
- der Anschlag mit Feder (77) konfiguriert ist, um von seitlichen oder frontalen Kräften einer vorbestimmten Stärke, die auf den Besenhaltearm (3) ausgeübt werden, durchbrochen zu werden, so dass der Besenhaltearm vorübergehend mit Bezug auf den ersten Hilfsarm (75) schwenken kann, ohne den Antriebszylinder (54) zu beanspruchen.

4. Die Kehrmaschine nach Anspruch 3, wobei für den Fall des Vorhandenseins einer seitlichen Kraft, die dazu neigt, den Besenhaltearm (3) vom Fahrgestell (10) zu entfernen, die zweite Feder (79) komprimiert ist, wodurch eine Drehung des Besenhaltearms mit Bezug auf den ersten Hilfsarm (75) ermöglicht wird, wobei dieser Letztere unbeweglich bleibt, und wobei die besagte Kompression der zweiten Feder (79) konfiguriert ist, um fortzubestehen, bis sie den Anschlag mit Feder (77) durchbricht, wodurch es der ersten Feder (82) somit ermöglicht wird, den Besenhaltearm (3) nach hinten zu ziehen.

5. Die Kehrmaschine nach einem der Ansprüche 3 und 4, wobei der Anschlag ein Knopf mit Feder (77) ist.

6. Die Kehrmaschine nach Anspruch 1, wobei der erste Hilfsarm (110) einen ersten Teil (110a) einer Seite der im Wesentlichen vertikalen Achse und einen zweiten Teil (110b) der anderen Seite der besagten im Wesentlichen vertikalen Achse umfasst, wobei der erste Teil (110a) mit dem zweiten Drehpunkt (56) verbunden ist, wobei die Kehrmaschine außerdem einen zweiten Hilfsarm (112) umfasst, der um die gleiche im Wesentlichen vertikale Achse wie der Besenhaltearm (3) und der erste Hilfsarm (110), jedoch unabhängig von diesen, schwenkbar ist, wobei die erste Feder (115) sowie der Anschlag (114), wobei es sich um einen Anschlag in Auflage handelt, zwischen dem zweiten Hilfsarm (112) und dem Besenhaltearm (3) montiert sind, wobei eine zweite Feder (118) zwischen dem zweiten Teil (110b) des ersten Hilfsarms und dem zweiten Hilfsarm (112) montiert ist, wobei die zweite Feder (118) durch das erste ihrer zwei Enden mit einem Stift (116) verbunden ist, der sich im Inneren der zweiten Feder (118) erstreckt, wobei der besagten Stift (116) mit dem zweiten Hilfsarm (112) durch einen Drehpunkt (117) verbunden ist, wobei die zweite Feder durch ihr zweites Ende auf dem zweiten Teil (110b) des ersten Hilfsarms aufliegt, wobei der Stift (116) mit Bezug auf den ersten Hilfsarm (110) gleitbar ist und der Stift (116) einen Rückhalteblock (119) umfasst, der die Entkoppelung des Stifts vom ersten Hilfsarm (110) verhindert, so dass:
- die Inbetriebnahme des Antriebszylinders (54) in der einen oder der anderen linearen Richtung eine Drehung des ersten Hilfsarms (110) in eine der zwei Drehrichtungen erzeugt, wobei der erste Hilfsarm (110) den Besenhaltearm (3) mit Hilfe des Anschlags (114) oder mit Hilfe der ersten Feder (115) mitführt,
- für den Fall des Vorhandenseins einer seitlichen Kraft, die dazu neigt, den Besenhaltearm (3) vom Fahrgestell (10) zu entfernen:
∘ ist die zweite Feder (118) zunächst komprimiert, wodurch es dem zweiten Hilfsarm (112) ermöglicht wird, mit Bezug auf den ersten Arm (110) zu schwenken, ohne den Antriebszylinder (54) zu beanspruchen,
∘ wenn die zweite Feder (118) ein vorbestimmtes Kompressionsniveau erreicht, expandiert diese Feder und zieht den Besenhaltearm (3) nach hinten.

7. Die Kehrmaschine nach irgendeinem der vorhergehenden Ansprüche, umfassend außerdem eine zusätzliche Feder (65), die zwischen dem Fahrgestell (10) und einer Struktur (66) montiert ist, die in der horizontalen Richtung verschoben werden kann, wobei die besagte verschiebbare Struktur mit einem Stützarm (67, 83', 120') verbunden ist, wobei der Besenhaltearm (3) und der erste Hilfsarm (57, 75, 110) mit dem Stützarm derart verbunden sind, dass
- der Besenhaltearm (3) und der erste Hilfsarm (57, 75, 110) mit Bezug auf den Stützarm (67, 83', 120') um die im Wesentlichen vertikale Achse schwenkbar sind,
- die zusätzliche Feder (65) konfiguriert ist, um die frontalen Schockeinwirkungen, ausgeübt auf den Besenhaltearm (3), zu absorbieren.

8. Kehrmaschine, umfassend ein Fahrgestell (10), mindestens drei Räder (5), einen Antriebsmotor, eine Kabine (1) für den Fahrer, einen oder mehrere Besen (2), wobei jeder Besen eine Drehung mit Bezug auf ein Gerüst (19) durchführen kann, das am Ende eines Besenhaltearms (3) montiert ist, der sich vor und/oder am Umfang der Kabine erstreckt, ebenso wie Mittel zum Ansaugen und Sammeln von Abfall, und wobei jeder der Besenhaltearme (3) mit einem Mechanismus versehen ist, der konfiguriert ist, um den Besenhaltearm um eine im Wesentlichen vertikale Achse schwenken zu lassen, wobei der besagte Mechanismus einen Linearantriebszylinder (54) und einen ersten Hilfsarm (57, 75, 110) umfasst, wobei der Antriebszylinder (54) zwischen zwei Drehpunkten (55, 56) montiert ist, wobei einer der zwei Drehpunkte (55) mit dem Fahrgestell (10) verbunden ist und der andere Drehpunkt (56) mit dem ersten Hilfsarm (57, 75, 110) verbunden ist, **dadurch gekennzeichnet, dass** der erste Hilfsarm (57, 75, 110) um die gleiche im Wesentlichen vertikale Achse wie der Besenhaltearm (3), jedoch unabhängig von diesem, schwenkbar ist,
die Kehrmaschine außerdem eine Feder (65) umfasst, die zwischen dem Fahrgestell (10) und einer Struktur (66), die in horizontaler Richtung verschiebbar ist, montiert ist, wobei die verschiebbare Struktur mit einem Stützarm (67, 83', 120') verbunden ist, wobei der Besenhaltearm (3) und der erste Hilfsarm (57, 75, 110) mit dem Stützarm derart verbunden sind, dass
• der Besenhaltearm (3) und der erste Hilfsarm (57, 75, 110) mit Bezug auf den Stützarm (67, 83', 120') um die besagte im Wesentlichen vertikale Achse schwenkbar sind,
• die Feder (65) konfiguriert ist, um die frontalen Schockeinwirkungen, ausgeübt auf den Besentragearm (3), zu absorbieren.

## Claims

1. Sweeper comprising a frame (10), at least three wheels (5), a propulsion motor, a cabin (1) for the driver, one or more brushes (2), each brush being able to perform a rotation relative to an armature (19) mounted at the end of a brush-holder arm (3) which extends in front of and/or at the periphery of the cabin, and waste suction and collection means, and in which each of the brush-holder arms (3) is provided with a mechanism configured to pivot the brush-holder arm about an essentially vertical axis, said mechanism comprising a linear actuator (54) and a first auxiliary arm (57, 75, 110), the actuator (54) being mounted between two pivots (55, 56), one of the two pivots (55) being connected to the frame (10) and the other pivot (56) being connected to the first auxiliary arm (57, 75, 110), **characterized in that** the latter is able to pivot about the same essentially vertical axis as the brush-holder arm (3), but independently thereof,
• the first auxiliary arm (57, 75, 110) and the brush-holder arm (3) are connected to one another at least by a first spring (59, 82, 115) and by an abutment (61, 77, 114), configured to maintain a constant position of the brush-holder arm (3) relative to the first auxiliary arm upon the actuation of the actuator (54) in either one of the two linear directions, said actuation generating a rotation of the assembly of the first auxiliary arm (57, 75, 110) and of the brush-holder arm (3) in one of the two rotational directions,
• in case of the presence of an external lateral force acting on the brush (2) and pushing it towards the interior of the sweeper, the first spring (59, 82, 115) allows a pivoting of the brush-holder arm (3) towards the frame (10), without pivoting of the first auxiliary arm (57).

2. The sweeper as claimed in claim 1, comprising a support (60) which is fixed to the brush-holder arm (3), and wherein a point of the first auxiliary arm (57), said point being located at the other side of said essentially vertical axis than the side at which the actuator (54) is located, is connected to one of the ends of the first spring (59), the other end of said first spring (59) being connected to the support (60) which is fixed to the brush-holder arm (3), and wherein the displacement of the first auxiliary arm (57) towards the support (60) is limited by the abutment (61) which is a push abutment, such that the actuation of the actuator (54) in either one of the two linear directions generates a rotation of the first auxiliary arm (57) in one of the two rotational directions, the first auxiliary arm (57) driving the brush-holder arm (3) by means of the abutment (61) or by means of the first spring (59).

3. The sweeper as claimed in claim 1, further comprising a second spring (79), a support (81) which is fixed to the brush-holder arm (3), a second auxiliary arm (78), and wherein the abutment (77) is a spring abutment, the second auxiliary arm (78) being able to pivot about the same essentially vertical axis as the brush-holder arm (3) and the first auxiliary arm (75) but independently thereof, the first spring (82) being mounted between the first and the second auxiliary arms (75,78), the spring abutment (77) and the first spring (82) being configured to be able to keep the two auxiliary arms (75,78) fixed to one another as long as the spring abutment (77) is not broken, the second spring (79) being connected at one of its ends to a rod (85) which is connected to the second auxiliary arm (78) by a pivot (86), the second spring (79) abutting at its second end on the support (81), the second spring (79) surrounding said rod (85), said rod (85) passing through the support (81) and being provided with a retaining block (80) which prevents the separation of said rod (85) from the support (81), such that:
• the actuation of the actuator (54) in either one of the two linear directions generates a rotation of the first auxiliary arm (75) in one of the two rotational directions, the first auxiliary arm (75) driving the brush-holder arm (3) by means of the retaining block (80) or by means of the second spring (79),
• the spring abutment (77) and the first spring (82) are configured to maintain the connection between the auxiliary arms (75,78) upon the actuation of the brush-holder arm by the actuator (54),
• the spring abutment (77) is configured to be broken by lateral or frontal forces of a predefined level, exerted on the brush-holder arm (3), such that the brush-holder arm can temporarily pivot relative to the first auxiliary arm (75), without forcing the actuator (54).

4. The sweeper as claimed in claim 3, wherein, in the case of the presence of a lateral force which tends to move the brush-holder arm (3) away from the frame (10), the second spring (79) is compressed allowing a rotation of the brush-holder arm relative to the first auxiliary arm (75), the latter remaining immobile, and wherein said compression of the second spring (79) is configured to continue until it breaks the spring abutment (77), thus allowing the first spring (82) to pull the brush-holder arm (3) backwards.

5. The sweeper as claimed in one of claims 3 and 4, wherein the abutment is a spring plunger (77).

6. The sweeper as claimed in claim 1, wherein the first auxiliary arm (110) comprises a first part (110a) on one side of the essentially vertical axis and a second part (110b) on the other side of said essentially vertical axis, the first part (110a) being connected to the second pivot (56), the sweeper further comprising a second auxiliary arm (112) which can be pivoted about the same essentially vertical axis as the brush-holder arm (3) and the first auxiliary arm (110) but independently thereof, the first spring (115) and the abutment (114), which is a push abutment, being mounted between the second auxiliary arm (112) and the brush-holder arm (3), a second spring (118) being mounted between the second part (110b) of the first auxiliary arm and the second auxiliary arm (112), the second spring (118) being connected at the first of its two ends to a rod (116) which extends inside the second spring (118), said rod (116) being connected to the second auxiliary arm (112) by a pivot (117), the second spring abutting at its second on the second part (110b) of the first auxiliary arm, the rod (116) being able to slide relative to the first auxiliary arm (110) and the rod (116) comprising a retaining block (119) which prevents the separation of the rod from the first auxiliary arm (110), such that:
• the actuation of the actuator (54) in either one of the two linear directions generates a rotation of the first auxiliary arm (110) in one of the two rotational directions, the first auxiliary arm (110) driving the brush-holder arm (3) by means of the abutment (114) or by means of the first spring (115),
• in case of presence of a lateral force which tends to move the brush-holder arm (3) away from the frame (10):
∘ first, the second spring (118) is compressed, allowing the second auxiliary arm (112) to pivot relative to the first arm (110), without forcing the actuator (54),
∘ when the second spring (118) reaches a predefined level of compression, this spring extends itself, pulling the brush-holder arm (3) backwards.

7. The sweeper as claimed in any one of the preceding claims, further comprising an additional spring (65) mounted between the frame (10) and a structure (66) that can be displaced in the horizontal direction, said displaceable structure being connected to a support arm (67, 83', 120'), the brush-holder arm (3) and the first auxiliary arm (57, 75, 110) being connected to the support arm such that:
• the brush-holder arm (3) and the first auxiliary arm (57, 75, 110) can be pivoted relative to the support arm (67, 83', 120'), about said essentially vertical axis,
• the additional spring (65) is configured to absorb the frontal shocks exerted on the brush-holder arm (3).

8. Sweeper comprising a frame (10), at least three wheels (5), a propulsion motor, a cabin (1) for the driver, one or more brushes (2), each brush being able to perform a rotation relative to an armature (19) mounted at the end of a brush-holder arm (3) which extends in front of and/or at the periphery of the cabin, and waste suction and collection means, and in which each of the brush-holder arms (3) is provided with a mechanism configured to pivot the brush-holder arm about an essentially vertical axis, said mechanism comprising a linear actuator (54) and a first auxiliary arm (57, 75, 110), the actuator (54) being mounted between two pivots (55, 56), one of the two pivots (55) being connected to the frame (10) and the other pivot (56) being connected to the first auxiliary arm (57, 75, 110), **characterized in that** the latter is able to pivot about the same essentially vertical axis as the brush-holder arm (3) but independently thereof, the sweeper further comprises a spring (65) mounted between the frame (10) and a structure (66) that can be displaced in a horizontal direction, said displaceable structure being connected to a support arm (67, 83', 120'), the brush-holder arm (3) and the first auxiliary arm (57, 75, 110) being connected to the support arm such that:
• the brush-holder arm (3) and the first auxiliary arm (57, 75, 110) can pivot relative to the support arm (67, 83', 120') about said essentially vertical axis,
• the spring (65) is configured to absorb the frontal shocks exerted on the brush-holder arm (3).
